# EUROPÄISCHE PATENTSCHRIFT

(11) **EP 2 681 620 B1**
(45) Veröffentlichungstag und Bekanntmachung des Hinweises auf die Patenterteilung: **21.02.2018**
(21) Anmeldenummer: 12711755.4
(22) Anmeldetag: 02.03.2012
(51) Int. Cl.: G02F 1/15, C09K 9/02, C08G 73/00

(54) **STABILES ELEKTROCHROMES MODUL**
STABLE ELECTROCHROMIC MODULE
MODULE ÉLECTROCHROME STABLE

(30) Priorität: 04.03.2011 DE 102011013132
(43) Veröffentlichungstag der Anmeldung: 08.01.2014
(73) Patentinhaber: THÜRINGISCHES INSTITUT FÜR TEXTIL- UND KUNSTSTOFF-FORSCHUNG e.V., 07407 Rudolstadt (DE)
(72) Erfinder: KONKIN, Gulnara, 07407 Rudolstadt (DE); SCHRÖDNER, Mario, 07407 Rudolstadt (DE); SCHACHE, Hannes, 07407 Rudolstadt (DE); RAABE, Dietrich, 07778 Dornburg (DE)
(74) Vertreter: Plate, Jürgen
(86) Internationale Anmeldenummer: PCT/EP2012/000932
(87) Internationale Veröffentlichungsnummer: WO 2012/119734

(56) Entgegenhaltungen:
- EP-A2- 0 961 158
- US-A- 4 786 715
- NAZMUTDINOVA ET AL: "Electrochromical studies on new electrochromic polymer", 4TH INTERNATIONAL SYMPOSIUM TECHNOLOGIES FOR POLYMER ELECTRONICS - TPE 10-),, 18. Mai 2010 (2010-05-18), Seiten 235-238, XP009159660, ISBN: 978-3-939473-66-4
- ARGUN A A ET AL: "Multicolored electrochromism in polymers: structures and devices", CHEMISTRY OF MATERIALS, AMERICAN CHEMICAL SOCIETY, WASHINGTON, US, Bd. 16, Nr. 23, 16. November 2004 (2004-11-16), Seiten 4401-4412, XP009159680, ISSN: 0897-4756

## Beschreibung

Die Erfindung betrifft ein elektrochromes Modul umfassend ein erstes Substrat, ein zweites Substrat, wobei das erste und/oder das zweite Substrat elektrisch leitfähig sind/ist oder mit einer ersten elektrisch leitfähigen Beschichtung, respektive mit einer zweiten elektrisch leitfähigen Beschichtung ausgerüstet ist, eine auf dem ersten Substrat oder der ersten leitfähigen Beschichtung angeordnete Beschichtung aus einem elektrochromen Polymer, eine auf dem zweiten Substrat oder der zweiten leitfähigen Beschichtung angeordnete Ionenspeicherschicht und einen elektrisch in Reihenschaltung zwischen der elektrochromen Beschichtung und der Ionenspeicherschicht angeordneten Elektrolyten.

Das erfindungsgemäße elektrochrome Modul zeichnet sich dadurch aus, dass es spannungsgesteuert reversibel zwischen mehr als zwei Farbzuständen geschaltet werden kann und nach einer großen Zahl von Schaltzyklen ohne nennenswerten Abfall der elektrochromen Eigenschaften, einen großen elektrochromen Kontrast, einen großen elektrochromen Wirkungsgrad mit schneller Schaltkinetik aufweist und zudem auslaufsicher ist.

Als elektrochromes Polymer verwendet wird ein im wesentlichen lineares Kondensationspolymer aus einem substituierten Tetraphenylbenzidin und einem (Hetero)arylen-bis-phenylmethanol der allgemeinen Strukturformel (I), (II), (III) oder (IV) 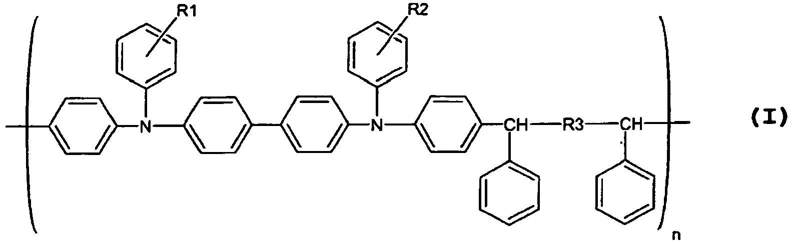 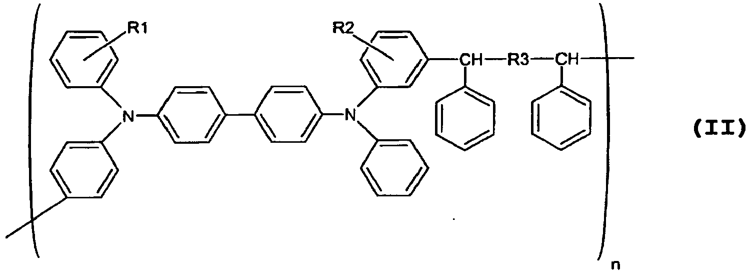 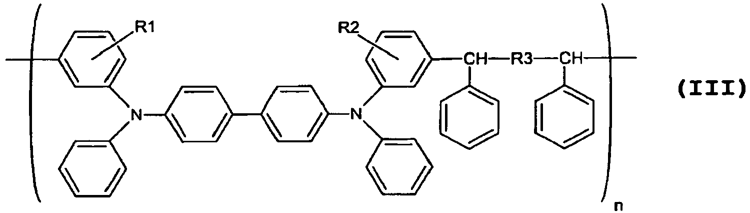 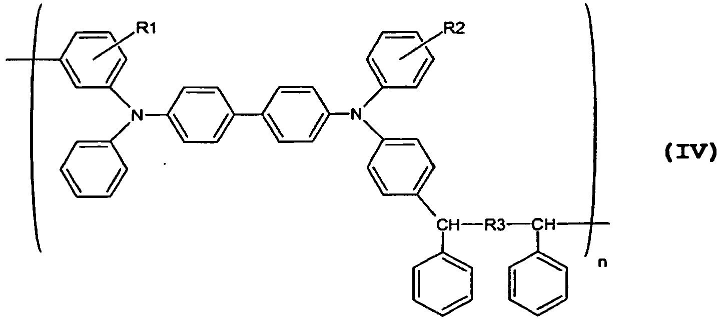 wobei R1 und R2 gleich oder unterschiedlich sind und jeweils eine Alkoxygruppe, ein Halogenatom, eine Cyanogruppe oder einen Kohlenwasserstoffrest mit 1-10 Kohlenstoffatomen, bevorzugt eine Alkylgruppe, eine Allylgruppe oder eine Vinylgruppe, und R3 einen zweiwertigen Rest einer gegebenenfalls substituierten aromatischen oder heteroaromatischen Verbindung, bevorzugt von Benzol, einem Hydrochinondialkylether, Diphenylether, Biphenyl oder Naphthalin, bedeuten.
Elektrochrome Module für die Anwendung als Lichtfilter, Display, blendfreier Rückspiegel u.ä. sind bekannt. Dabei werden redoxaktive Materialen wie Wolframoxid, Viologen oder verschiedene Polymere wie Polythiophen, Polyethylendioxythiophen (PEDOT), Polyanilin u.a. reversibel elektrochemisch oxidiert und reduziert, wobei sich ihre Farbe ändert. Obwohl die verschiedenen bekannten elektrochromen Systeme im Einzelfall recht gut funktionieren, gibt es doch auch eine Reihe von Nachteilen. Die elektrochromen Materialien wie Bipyridinium-Verbindungen (Viologene) können zwischen drei Redox-Formen geschaltet werden, reversibel vom Dikation zum Radikalkation und irreversibel zur neutralen Form. Dabei bewirkt die Pimerisation der Radikalkationen (Bildung eines π-Komplexes durch die π-Elektronenebenen) ein verändertes Absorptionsspektrum und wirkt sich nachteilig auf den Farbkontrast und die Lebensdauer der EC-Systeme aus.

Es sind Stabilisierungs-Materialien erforderlich wie Metallocene und Metallocen-Derivate (DE102007037619A1, US 2009/0259042A1, DE 102008024260B4) sowie andere Verbindungen, die beispielweise aus EP 1288275A2 und DE102006061987 bekannt sind, welche durch die Gewährleistung einer reversiblen anodischen Teilreaktion, für eine verbesserte Lebensdauer der kathodisch schaltenden elektrochromen Formulierung (bevorzugt 4,4'-Bipyridinium-Salze) im Hinblick auf die Kontrastlangzeitstabilität sorgen. Hier bestehen jedoch ebenfalls Probleme hinsichtlich des Farbkontrasts und der Lebensdauer. In Langzeituntersuchungen machen sich dabei gebildete Metalloceniumkationen bemerkbar durch Bildung einer gelb-braunen Schicht an der Anode. Außerdem führt die Zugabe von Metallocenen in eine elektrochrom aktive Formulierung zu bislang unkontrollierten Entmischungsprozessen, z.B. der Abscheidung von Ferrocenaggregaten.

Die meisten für Anwendungen bedeutsamen elektrochromen Materialien sind nur zwischen zwei Farben schaltbar: Viologene (farblos ↔ blau/violett), Wolframoxid (WO₃) (hellblau ↔ blau), Poly-3-hexylthiophen (violett ↔ blau), Polyethylendioxythiophen (PEDOT-PSS) (hellblau ↔ dunkelblau). Dadurch können Filter nur zweifarbig bzw. Displays nur monochrom realisiert werden.

Zudem sind viele elektrochrome Materialien wie z.B. WO₃ oder PEDOT-PSS nur in dünnen Schichten pseudo-farblos, so dass sie für die Anwendungen, wo der farblose Zustand in einem breiten Wellenlängenbereich (500-1000 nm) erforderlich ist, nur bedingt geeignet sind.

Es wurden bisher zahlreiche Untersuchungen bezüglich organischer Materialien unter Verwendung des elektrochromen Effekts durchgeführt. Der große Vorteil der elektrochromen Polymere sind ihre steuerbare Multichromie durch Modifizierung der chemischen Struktur, sowie die kostengünstige Herstellung beliebig dünner und großflächiger Schichten sowohl auf Glas- oder Metall-Substraten als auch auf flexiblen Folien und Textilien.

Als Polymere, welche sich für elektrochrome Anwendungen eignen, sind Polythiophene, Polypyrrol, Polyphenylenvinylene und Polyanilin bekannt. Jedoch neigen diese elektrochromen leitfähigen Polymere zu Veränderungen an der Luft, insbesondere hinsichtlich ihrer elektrischen Eigenschaften und elektrochemischen Stabilität und haben als Folge nur eine geringe Lebensdauer. Es ist daher wichtig, die EC-Module zu verkapseln und vor äußeren Einflüssen zu schützen. Dabei beeinträchtigt die nötige starre Verkapselung die Flexibilität. Ferner weisen solche Polymere eine niedrige Glastemperatur und z.B. Polypyrrol und Polyanilin eine schlechte Löslichkeit auf, so dass sie sich schlecht verarbeiten lassen. Diese Nachteile stellen ernsthafte Hindernisse für ihren praktischen Einsatz dar.

Bestimmte Polymere mit Di- oder Triarylamin-Einheiten sind als Lochleiter, Elektrolumineszenz- und lichtemittierende Materialien sowie mehrfarbige Elektrochrome bekannt (W. Holzer at al., Optical Materials 15, 2000, 225-235).

Beispiele für die Verwendung von Diphenylamin und seiner Derivate als elektrochromes Material oder in Kombination mit Anthrachinonen beschreibt US4752119. Es wurde vorgeschlagen, eine Lösung aus einem Diphenylamin und einem Leitsalz in einem chemisch stabilen organischen Lösungsmittel (bevorzugt Propylencarbonat) zwischen zwei Elektroden zu verwenden. Auf eine Elektrode wurde eine TiO₂-Streuschicht aufgebracht, um die Farbänderung auf dem weißen Hintergrund besser zu erkennen. Durch das Anlegen einer Spannung von 1,0 V bis 1,5 V bekommt die Lösung eine grüne Farbe. Wenn die Spannung bis 2,2 V erhöht wird, bildet sich eine blau-grüne Farbe in der Lösung. Wird die Spannung abgeschaltet, dann kommt das System über Diffusion wieder in den farblosen Ausgangszustand. Nach 10⁶ Schaltzyklen wurden nur kleinere elektrochemische Verschlechterungen in der Zelle registriert. Problematisch sind solche Systeme mit flüssigen Medien jedoch hinsichtlich der Betriebstemperaturen und der Lebensdauer, deshalb müssen sie hermetisch verkapselt werden.

Die Erfindung gemäß DE 3717917 bezieht sich auf ein neues Polymer, das aus sich wiederholenden Einheiten von N,N,N',N'-Tetraphenyl-p-phenylendiamin besteht und Elektrochromie-Eigenschaften aufweist. Das Polymer ist in organischen Lösungsmitteln löslich und wird erst unlöslich wenn es einmal mit einem Elektronenakzeptor dotiert wurde und danach dedotiert wird. Dieser Polymerfilm zeigt im Potentialbereich von 0,3 V (gegenüber Ag/AgCl) eine gelbe Farbe, im oxidierten Zustand der ersten Stufe bei 0,85 V eine grüne Farbe und im oxidierten Zustand der zweiten Stufe bei 1,2 V eine dunkelblaue Farbe. Es wurde ein elektrochromes Display durch folgende Schritte hergestellt. Eine transparente Glasplatte wurde mit einem Isolierfilm aus MgF₂ (80 nm) außerhalb des Anzeigebereichs bedampft, danach mit obengenanntem Polymer aus einer Chloroform-Lösung beschichtet (200 nm), nachfolgend mit Jod bei 100 °C dotiert und anschließend dedotiert im Hochvakuum. Auf einer anderen mit einer Grafitfiberschicht beschichteten Glasplatte wurde ein Berliner Blau Film (300 nm) elektrolytisch abgeschieden. Zwischen beiden Gläsern wurde eine poröse Hintergrundtafel aus Aluminiumoxid angeordnet und die beiden Elektroden wurden versiegelt. Als Elektrolyt diente 1 mol/l Lösung von LiClO₄ in Propylencarbonat. Dieses elektrochrome Display wurde durch Anwendung einer Färbungsspannung von 8 V und einer Aufhellungsspannung von -8 V wiederholt bis 10⁵ mal geschaltet. Dabei wurde nur eine kleine Veränderung der Ladungsmenge bei der Oxidationsreaktion gegenüber dem Anfangswert bestimmt. Die Herstellung des elektrochromen Displays ist mehrstufig, verbunden mit unterschiedlichen technologischen Prozessen (dotieren mit Jod bei 100 °C, dedotieren im Hochvakuum, elektrolytische Abscheidung von Berliner Blau), was zu einem erhöhten technischen und Kostenaufwand führt. Des weiteren sind die Färbungs- und Aufhellungsspannungen von ±8 V sehr hoch im Vergleich zu herkömmlichen EC-Zellen und ökonomisch von Nachteil.

Die DE 3615379 A1 beschreibt einen blendfreien Spiegel. Die erste elektrochrome Schicht wird aus einem konjugierten Polymer wie einem substituierten oder unsubstituierten Triphenylamin gebildet, und die andere EC-Schicht ist ein Übergangsmetalloxid, wie WO₃. Im dargestellten Verfahren wird ein Film aus geeigneten Triphenylamin Monomer- oder Polymerlösungen auf die Elektrode unter Verwendung eines Beschichtungsverfahrens aufgebracht und nachfolgend mittels Oxidationsmittel, wie Jod, Antimonpentafluorid, Arsenpentafluorid oder Eisenoxid polymerisiert oder vernetzt. Eine weitere Möglichkeit der Filmbildung ist eine elektrolytische Polymerisation aus Monomer-Lösung. Beispielsweise besteht ein solcher Spiegel aus 4,4'-Dichlortriphenylaminpolymer und WO₃ EC-Schichten mit einer Elektrolytlösung aus LiClO₄ in Propylencarbonat mit 3 Gew. % Wasser. Die Reflexion des Spiegels beträgt im Anfangszustand etwa 70%. Bei Anwendung einer Spannung von etwa 1,45 V färbte sich der Spiegel in etwa 4 s dunkelblau, so dass sich die Reflexion auf etwa 10% erniedrigte. Eine Spannung von etwa -0,35 V führte zu Entfärbung des Spiegels. Die aufeinanderfolgende Färbung (1,1 V, 15 s) und Entfärbung (-0,4 V, 90 s) waren stabil reproduzierbar auch nach 30 000 Wiederholungen. Die in situ Polymerisation oder Vernetzung des Überzugsfilms hat den Nachteil, dass Rückstände des Oxidationsmittels in den Film, bei wiederholter Oxidation und Reduktion zu unerwünschten Nebenreaktionen führen können und als Folge zu einer unbefriedigenden Lebensdauer der Vorrichtung. Ebenso bringt es für den praktischen Einsatz einen zusätzlichen technologischen Schritt.

Elektronenreiche Triphenylamine neigen dazu, in Anwesenheit von Sauerstoff und Licht unter Bildung eines instabilen Radikal-Kations zu oxidieren, das weiter zu einem Tetraphenylbenzidin dimerisiert. Diese Oxidation führt sowohl zu einer Vergilbung der Polymerschichten als auch zur Limitierung der Lebensdauer der EC-Elemente. Durch Austausch einer Gruppe in Para-Phenyl-Position kann die Dimerisierungs-Reaktion wesentlich reduziert werden. Jedoch wurde vor kurzem publiziert, dass das konjugierte Homopolymer Poly(4-Methoxy-Triphenylamin) nur einen mäßig stabilen EC-Effekt bis ca. 50 Zyklen aufweist (G.-S. Liou at al, Journal of Polymer Science: Part A: Polymer Chemistry, (2007),V. 45, 3292-3302).

Herstellung und grundlegende elektrochemische Eigenschaften von Polymeren mit arylsubstituierten Arylendiaminpolymeren sind in DE19832943 enthalten. Es wurde gezeigt, dass durch Elektrooxidation einer Lösung eines 3,3'-substituierten Triphenyldiamin-Dimer-Polymeren (TPD-Polymeren) reversibel eine blaue Farbe entsteht.

Wünschenswert ist der Einsatz von TPD- und Tetraarylbenzidin-Polymeren als elektrochrome Materialien in ein elektrochromes Modul mit geeignetem Elektrolyt und geeigneter Ionenspeicherschicht, wodurch die Durchführung von Redoxreaktionen mit günstiger zyklischer Periodizität und damit ein stabiler EC-Effekt gewährleist ist.

Der Erfindung liegt die Aufgabe zugrunde, ein elektrochromes Modul zu Verfügung zu stellen, welches perfekt farblos in einem breiten Wellenlängenbereich ist (500-1100 nm) und im Gegensatz zum Stand der Technik sich in wenigen technologisch einfachen, umweltfreundlichen und kostengünstigen Schritten herstellen lässt. Zudem ist es Aufgabe der Erfindung, mit nur einem elektrochromen Material mehr als zwei Farbzustände darzustellen und gleichzeitig eine große Zahl von Schaltzyklen ohne nennenswerten Abfall der elektrochromen Eigenschaften, einen großen elektrochromen Kontrast und einen großen elektrochromen Wirkungsgrad der Module mit einer effektiven Schaltkinetik zu erreichen.

Gelöst wird die Aufgabe mit einem elektrochromen Modul gemäß Anspruch 1.

Im Rahmen der vorliegenden Erfindung werden das erste Substrat, das gegebenenfalls mit einer ersten leitfähigen Beschichtung ausgestattet ist und die auf dem ersten Substrat bzw. auf der ersten leitfähigen Beschichtung angeordnete elektrochrome Beschichtung zusammenfassend auch als Arbeitselektrode bezeichnet. Hierzu analog werden das zweite Substrat, das gegebenenfalls mit einer zweiten leitfähigen Beschichtung ausgestattet ist und die auf dem zweiten Substrat bzw. auf der zweiten leitfähigen Beschichtung angeordnete Ionenspeicherschicht zusammenfassend auch als Gegenelektrode bezeichnet.

Bei der Erfindung wird von dem bekannten Aufbau elektrochromer Module ausgegangen und die elektrochromen Eigenschaften der erfindungsgemäßen Polymeren in Kombination mit einen polymeren Gel-Elektrolyt und einer Ionenspeicherschicht beschrieben.

Das erfindungsgemäß redoxstabile Polymer ist ein Tetraarylbenzidin-Diol Kondensationspolymer, bevorzugt ein Copolymer der folgenden allgemeinen Strukturformel I, II, III oder IV, 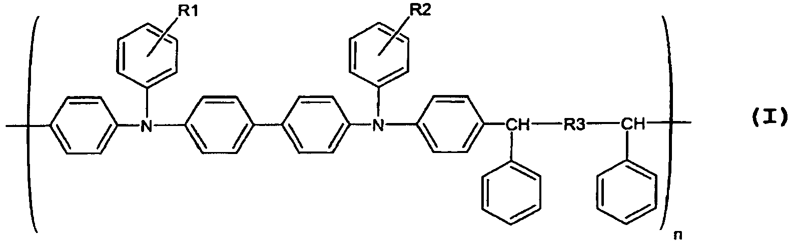 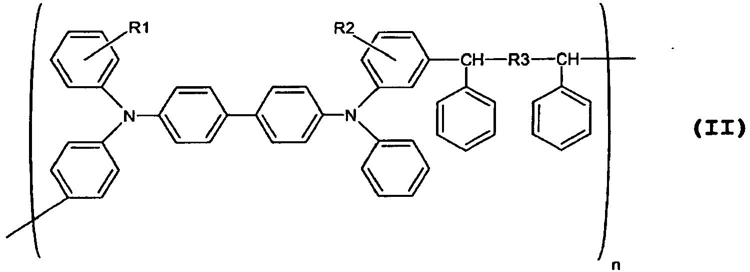 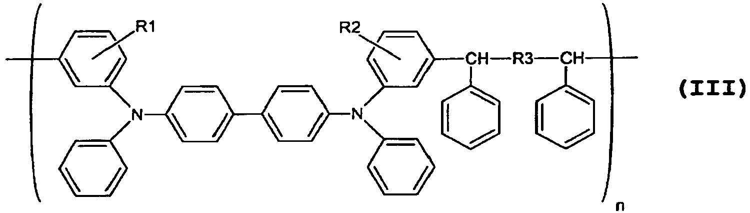 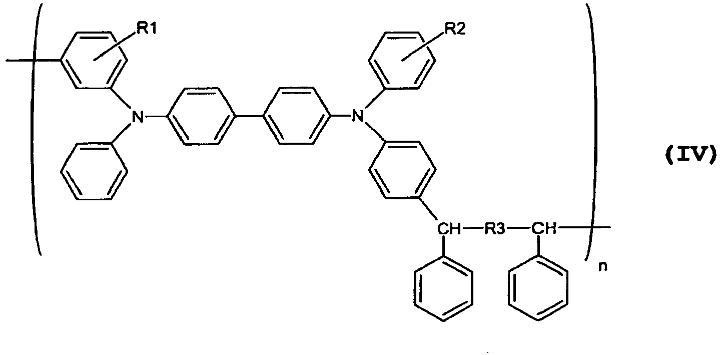 wobei R1 und R2 gleich oder unterschiedlich sind und jeweils eine Alkoxygruppe, ein Halogenatom, eine Cyanogruppe oder einen Kohlenwasserstoffrest mit 1-10 Kohlenstoffatomen, vorzugsweise eine Alkylgruppe, eine Allylgruppe oder Vinylgruppe und R3 verschiedene aromatische Reste bedeuten. Darin ist R3 ein Derivat von aromatischen und heteroaromatischen Verbindungen, bevorzugt von Benzol, Hydrochinondialkylethern, Diphenylether, Biphenyl, Naphthalin und anderen Aromaten und Heteroaromaten und deren Verbindungen.

Diese Polymerfilme sind perfekt farblos und (im Bereich des sichtbaren Lichts) transparent im neutralen Zustand und können durch eine relativ niedrige Spannung gefärbt und wieder entfärbt werden.

Dass die in dieser Anmeldung verwendeten Polymere (in einer Redoxstufe) farblos sind, ist ein großer Vorteil gegenüber bekannten EC-Polymeren (Polythiophene, Polypyrrole, Polyphenylenvinylene, Polyanilin und PEDOT-PSS), die sowohl im oxidierten und reduzierten Zustand farbig sind. Für viele Anwendungen, in denen außer den farbigen Zuständen die Transparenz der Vorrichtung erforderlich/gewünscht ist (u. a. Displays, Verglasungen, Brillen), sind sie deshalb perfekt geeignet.

Die erfindungsgemäßen Polymere besitzen im wesentlichen eine lineare Struktur und eine hohe Glastemperatur (T_{g}>200°C). Vorteilhaft ist es, dass die Polymere in Form dünner Filme an der Luft stabil sind und keine Inert-Bedingungen bei der Bearbeitung erfordern. Ferner lösen sie sich gut in Lösungsmitteln wie Dioxan, Chloroform, Dichlormethan, Chlorbenzol und Toluol, wodurch aus Lösungen beliebig dünne Schichten auf Glas- oder Metallsubstraten als auch auf flexiblen Folien und Textilien mittels Spincoater, Rakel-Technik, Rolle zu Rolle sowie Druck-Verfahren und Spray-Methoden hergestellt werden können, wobei die Schichtdicken zwischen 50 nm und 1 pm, bevorzugt 200 bis 500 nm, betragen. Im Gegensatz zum Stand der Technik erfordern die erfindungsgemäßen Polymerschichten keine Nachbehandlung (vernetzen, polymerisieren, dotieren, dedotieren), wodurch die technologische Prozedur wesentlich vereinfacht wird. Dabei sind sie jedoch unlöslich in Wasser, Alkoholen, aliphatischen Kohlenwasserstoffen, Propylencarbonat, ionischen Flüssigkeiten wie z.B. Ethyl-methylimidazolium bis-(trifluoromethyl)sulfonyl)imid (EMITf₂N) sowie in 1-Ethyl-3-methyl-imidazolium tetrafluorborat, die in elektrochromen Modulen als Elektrolyt verwendet werden können.

Gemäß der Erfindung bilden die EC-Polymere aus Lösungen mit einem Polymergehalt von 0,5 bis 30 Masseprozent, vorzugsweise von 1 bis 3 Masseprozent homogene dünne Schichten (ca. 200-500 nm) auf unterschiedlichen Gläsern und flexiblen Substraten, die im EC-Modul einen Wirkungsgrad bis zu 950 cm²/C und einen elektrochromen Kontrast bis 55 % für die Blaufärbung erreichen.

Die erfindungsgemäßen Polymere werden in einem elektrochromen Modul in Kombination mit einem polymeren Gel-Elektrolyt (z.B. auf Basis EMITf₂N) sowie einer Ionenspeicherschicht bei Anlegen einer Spannung von ca. 0,4 V an der Arbeitselektrode oxidiert, wodurch das Modul eine homogene orange Farbe bekommt. Ferner entsteht durch die weitere Oxidation des EC-Polymers bei Anlegen einer Spannung von 0,9 V im EC-Modul eine homogene blaue Farbe. Es wird dabei der orange Farbzustand durchlaufen. Wenn die Spannung bis auf - 1,0 V abnimmt, kehrt das EC-Modul wieder zum farblosen Zustand zurück. Insbesondere sind Gegenstand der Erfindung EC-Module mit obengenannten Polymeren, die auf Wunsch zwischen farblos-klar und farbig (z.B. farblos/orange und/oder farblos/blau) sowie zwischen zwei Farben (z.B. orange/blau), als auch zwischen drei Zuständen (farblos/orange/blau) geschaltet werden können.

Die erfindungsgemäßen elektrochromen Module zeigen aufgrund der optimalen Kombination von verwendetem EC-Polymer, polymerem Gel-Elektrolyt sowie der Ionenspeicherschicht eine sehr gute Schaltkinetik von blau nach farblos in 2 sec. (88% optischer Kontrast) und von farblos nach blau in 7 sec (90 % optischer Kontrast, Fläche 3,5 cm²).

Darüber hinaus weisen die EC-Polymere bei Anlegen einer Spannung von ca. 0,4 V ein breites langwelliges Absorptionsmaximum (λ=1300 nm) mit einem optischen Kontrast von ca. 14 % auf.

Erfindungsgemäße EC-Module mit EC-Polymeren in Kombination mit einem polymeren Gel-Elektrolyt auf Basis EMITf₂N sowie einer Ionenspeicherschicht zeigen einen stabilen EC-Effekt über mindesten 10000, vorzugsweise mindestens 20000 Schaltzyklen farblos/blau.

In der Erfindung wird ein gelartiger bzw. polymerbasierter Elektrolyt mit einem gelösten Lithium-Salz eingesetzt. Gelbildende Polymere sind beispielweise Poly(vinyliden fluoridco-hexafluoropropylen) (PVDF-HFP), Polyacrylnitril (PAN) oder Poly(methyl-methacrylat) (PMMA). Als Lösungsmittel sind ionische Flüssigkeiten wie 1-Ethyl-3-methyl-imidazolium bis(trifluoromethyl)sulfonyl)imid (EMITf₂N) bevorzugt. Andere nicht ausschließliche Beispiele für Lösungsmittel sind Propylencarbonat, Mischungen aus Propylencarbonat/ Ethylencarbonat/ Diethylcarbonat und andere Carbonate. Des Weiteren enthält der polymerbasierte Elektrolyt in einer Konzentration von 0,1 mol/l bis 1 mol/l ein Lithiumsalz wie LiTf₂N, LiTfO (Lithiumtrifluormethansulfonat) oder LiClO₄ (Lithiumperchlorat). Das Leitsalz und das gelbildende Polymer sind vollständig im Elektrolyt gelöst und verursachen somit keine Färbung des Elektrolyts. Der Gelelektrolyt weist neben einer hohen Leitfähigkeit (bis 6 mS/cm (EMITf₂N, LiTf₂N, PVDF-HFP)) vor allem eine gute optische Transparenz im visuellen Bereich auf.

Gemäß der Erfindung umfaßt die Gegenelektrode eine Ionenspeicherschicht, die zu mehr als 50 Gew.-%, bevorzugt mehr als 60 Gew.-%, aus einem Material ausgewählt aus der Gruppe bestehend aus Wolframoxid, Nickeloxid, Ceroxid, Titanoxid, Molybdänoxid, Vanadiumoxid (WO₃, NiO, CeO₂, TiO₂, MoO₃, V₂O₅) und Mischungen davon, besteht. Ionenspeicherschichten auf Basis von CeO₂-TiO₂-Mischoxiden, die auf dem Prinzip der Li⁺-Insertion in CeO₂ basieren, sind besonders bevorzugt. Ihre Hauptaufgabe ist es, die auf die Arbeitselektrode verschobene Ladung schnell und vollständig zu kompensieren. Es wurde eine herkömmliche CeO₂-TiO₂-Mischoxidelektrode mit einer Ladungsspeicherdichte bis 26 mC/cm² unter Anwendung eines Sol-Gel-Verfahrens verwendet, die bereits in der Literatur beschrieben ist [C. O. Avellaneda et al., Thin Solid Films 471, (2005) 100-104, A. Verma et al., Thin Solid Films 516, (2008) 4925-4933].

Die Erfindung wird nachfolgend anhand von Figuren näher erläutert. Es zeigen:
- Fig. 1-2: jeweils ein elektrochromes Modul mit mehrschichtigem Aufbau;
- Fig. 3: das elektrische Schaltdiagramm eines elektrochromen Moduls;
- Fig. 4: ein Cyclovoltagramm eines elektrochromen Moduls;
- Fig. 5: die spektrale Transmission eines elektrochromen Moduls in drei verschiedenen Schaltzuständen;
- Fig. 6-7: den zeitlichen Verlauf der elektrischen Stromstärke in einem elektrochromen Modul während Schaltvorgängen; und
- Fig. 8: die zeitabhängige Transmission während eines Schaltvorgangs.

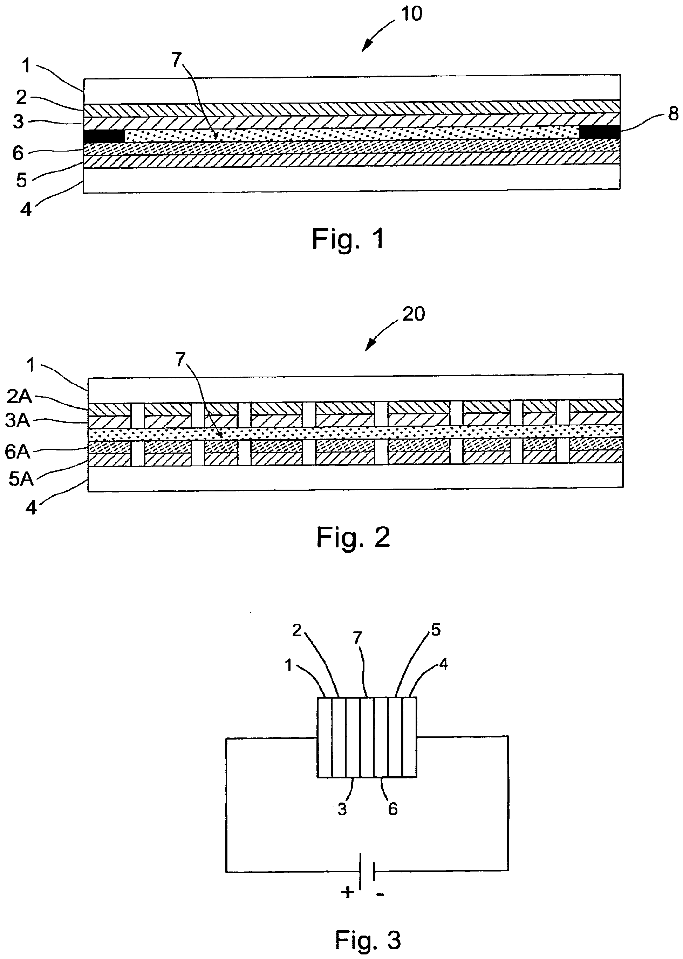

In Fig. 1 ist ein erfindungsgemäßes elektrochromes Modul 10 mit einem ersten Substrat 1 und einem zweiten Substrat 4 dargestellt. Das erste Substrat 1 und das zweite Substrat 4 können jeweils aus einem transparenten Werkstoff, wie Floatglas, Quarzglas, einer Kunststofffolie, einer Metallfolie, einem transparenten, semitransparenten oder intransparenten Textil bestehen. Das zweite Substrat 4 kann außerdem aus einem intransparenten polymeren, keramischen, metallischen oder textilen Werkstoff bestehen. Bevorzugt sind das erste und/oder zweite Substrat (1, 4) jeweils mit einer leitfähigen Beschichtung 2, respektive 5 aus dem gleichen oder voneinander verschiedenen Werkstoffen ausgerüstet. Die leitfähigen Beschichtungen 2 und 5 bestehen beispielweise aus einem transparenten leitfähigen Oxid (TCO), wie Zinnoxid oder Zinkoxid, Aluminium-dotiertes Zinnoxid (ZAO), Indiumzinnoxid (ITO) oder Fluor-dotiertem Zinnoxid (FTO), einem Metall, wie beispielsweise Gold, Platin oder Edelstahl oder einem leitfähigen Polymer, wie beispielsweise Poly-3,4-Ethylendioxy-Thiophen Poly(Styrolsulfonat) (PEDOT-PSS). In alternativen Ausführungsformen der Erfindung besteht das erste Substrat 1 und/oder das zweite Substrat 4 aus einem intrinsisch leitfähigen Textil, das metallische oder metallisierte Filamente umfasst. Bei Verwendung eines Substrats 1 und/oder 4 aus einem intrinsisch leitfähigen Textil entfällt die leitfähige Beschichtung 2, respektive 5.

Auf dem gegebenenfalls mit der leitfähigen Beschichtung 2 ausgerüsteten Substrat 1 ist eine Beschichtung 3 angeordnet, die aus dem vorstehend beschriebenen elektrochromen Polymer besteht, d.h. aus einem im Wesentlichen linearen Kondensationspolymer aus einem Tetraarylbenzidin und einem (hetero) aromatischen Diol. Die Beschichtung 3 wird erzeugt, indem eine Lösung des elektrochromen Polymers mittels bekannter Methoden wie Sprühen, Rakeln oder Spincoating auf das Substrat 1 bzw. auf die leitfähige Beschichtung 2 aufgebracht wird.
Auf dem gegebebenfalls mit der leitfähigen Beschichtung 5 ausgerüsteten Substrat 4 ist eine Ionenspeicherschicht 6 angeordnet, die zu mehr als 50 Gew.-%, vorzugsweise mehr als 80 Gew.-% aus einem Material gewählt aus der Gruppe umfassend Ceroxid, Titanoxid, Wolframoxid, Nickeloxid, Molybdänoxid, Vanadiumoxid (CeO₂, TiO₂, WO₃, NiO, MoO₃, V₂O₅) und Mischungen hiervon, und besonders bevorzugt aus CeO₂-TiO₂-Mischoxid besteht. Die Ionenspeicherschicht 6 wird vorzugsweise durch Auftragen einer Dispersion eines der vorstehenden Oxide und nachfolgendes Trocknen und gegebenenfalls Sintern erzeugt. Alternativ hierzu wird die Ionenspeicherschicht 6 durch Abscheidung aus der Dampfphase, beispielsweise mittels CVD oder PVD hergestellt.
Im Weiteren umfasst das elektrochrome Modul 10 einen zwischen der elektrochromen Beschichtung 3 und der Ionenspeicherschicht 6 angeordneten polymeren Gelelektrolyt 7, der mindestens ein vernetztes Polymer wie PVDF-HFP, PAN oder PMMA, mindestens eine ionische Flüssigkeit, wie 1-Ethyl-3-methyl-imidazoliumbis(trifluoromethyl)sulfonyl)imid, Propylencarbonat, Mischungen aus Propylencarbonat/ Ethylencarbonat/ Diethylcarbonat und mindestens ein Lithiumsalz wie LiTf₂N, LiTfO oder LiClO₄ umfasst.

Gemäß der Erfindung ist der polymere Gelelektrolyt 7 zwischen der elektrochromen Beschichtung 3 und der Ionenspeicherschicht 6 derart angeordnet, dass die elektrochrome Beschichtung 3, der polymere Gelelektrolyt 7 und die Ionenspeicherschicht 6 elektrisch in Reihe geschaltet sind (siehe Fig. 3). Dementsprechend sind auch elektrochrome Module vorgesehen, bei denen das Substrat 1 und/oder das Substrat 4 aus einem intrinsisch elektrisch leitfähigen oder mit einer leitfähigen Beschichtung 2 und/oder 5 ausgerüsteten textilen Material besteht, wobei der polymere Gelelektrolyt 7 die Poren des Substrats 1 und/oder 4 durchdringt und ausfüllt und dessen leitfähige Filamente umhüllt.

Optional ist das elektrochrome Modul 10 randseitig mit einer Versiegelung 8 ausgerüstet. Die Versiegelung 8 besteht beispielsweise aus einem polymeren Material und umschließt den Rand der Schicht aus dem polymeren Gelelektrolyt 7. Vorzugsweise erstreckt sich die Versiegelung 8 teilweise oder vollständig über die Ränder der Substrate 1 und 4.

Fig. 2 zeigt ein weiteres elektrochromes Modul 20 gemäß der vorliegenden Erfindung. Das Modul 20 umfasst eine strukturierte leitfähige Beschichtung 2A und/oder eine strukturierte leitfähige Beschichtung 5A. In zweckmäßigen Ausgestaltungen sind zudem eine strukturierte elektrochrome Beschichtung 3A und/oder eine strukturierte leitfähige Ionenspeicherschicht 6A vorgesehen. Der Begriff "strukturierte Schicht" bzw. "strukturierte Beschichtung" bezeichnet im Rahmen der Erfindung ein mittels bekannter Methoden, wie Photolithographie erzeugtes schaltungstechnisches Muster. Insbesondere sind matrixartige Muster vorgesehen, die es ermöglichen, das elektrochrome Modul 20 nach Art eines Displays zu betreiben und für die digital gesteuerte Anzeige von Bildern und Zeichen zu nutzen.

Das folgende Beispiel erläutert die Herstellung eines erfindungsgemäßen elektrochromen Moduls.

### Beispiel 1:

Eine Toluol-Lösung mit 1,5 Masseprozent Polymer, hergestellt durch Polykondensation von 1,4-Bis(phenylhydroxymethyl)benzol und N,N'-Bis-(4-methylphenyl)-N,N'-diphenyl-benzidin wird auf ein FTO-Glas (d. h. mit einer elektrisch leitfähigen Beschichtung aus Fluor-dotiertem Zinnoxid ausgestattetes Glas) mittels Spin-Coater aufgetragen, wobei sich ein homogener Film von ca. 500 nm Dicke (nach dem Trocknen) bildet. Dieser ist im EC-Modul als Arbeitselektrode (AE) vorgesehen. Auf das andere FTO-Glas wird eine ethanolische Lösung, welche 5 Masse% Wasser, 0,2 mol/l Ammoniumcer (IV) -nitrat (NH₄)₂Ce(NO₃)₃ und 0,2 mol/l Tetraisopropylorthotitanat (Ti(o-Propyl)₄) enthält, mittels Spin-coater in einer dünnen Schicht aufgebracht und bei 150°C getrocknet. Das wird dreimal wiederholt und das Ganze schließlich bei 500 °C erhitzt, wobei ein CeO₂-TiO₂-Mischoxid entsteht. Das wird dann in den EC-Modulen als transparente Gegenelektrode(GE) verwendet. Zwei beschichtete FTO-Gläser (AE und GE) werden dann zum EC-Modul mittels einer Heißsiegel-Folie zusammengefügt. Das EC-Modul wird schließlich in einer Glovebox mit Polymerelektrolyt (PVDF-HFP, LiTf₂N 0,1 mol/l in EMITf₂N) bei 90 °C durch zwei kleine Löcher befüllt und letztere werden nachfolgend versiegelt.

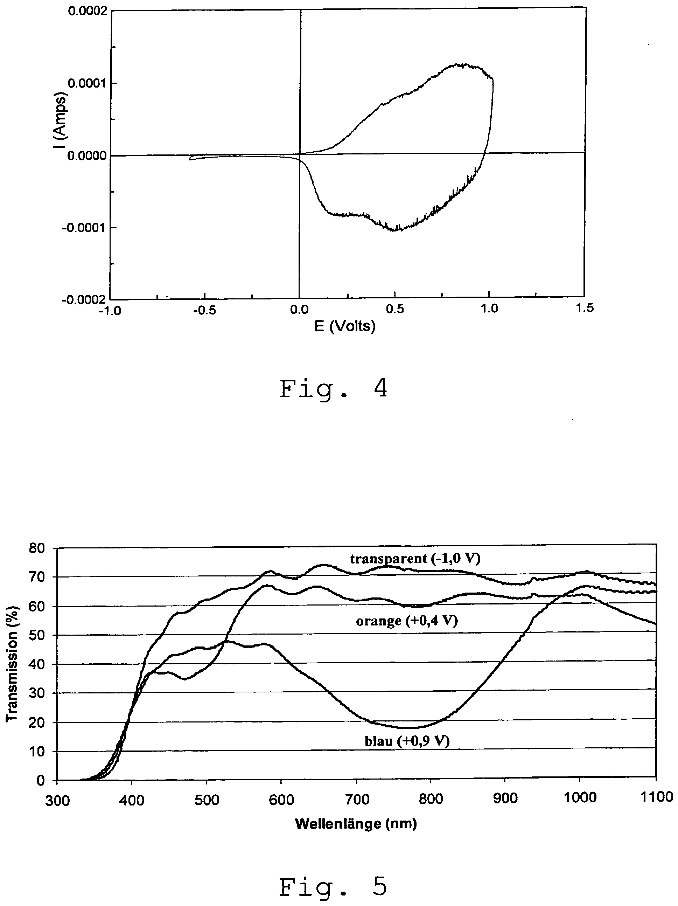

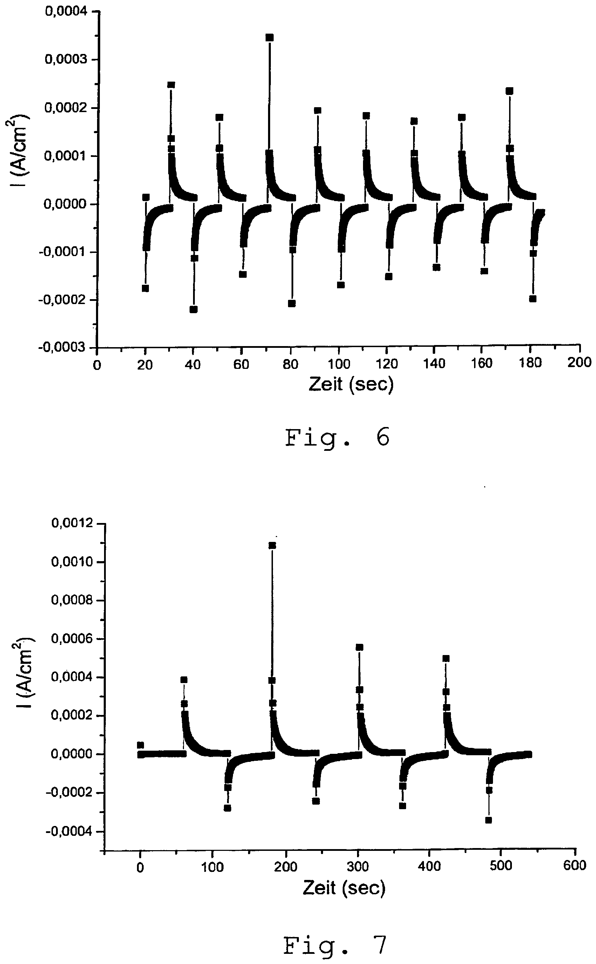

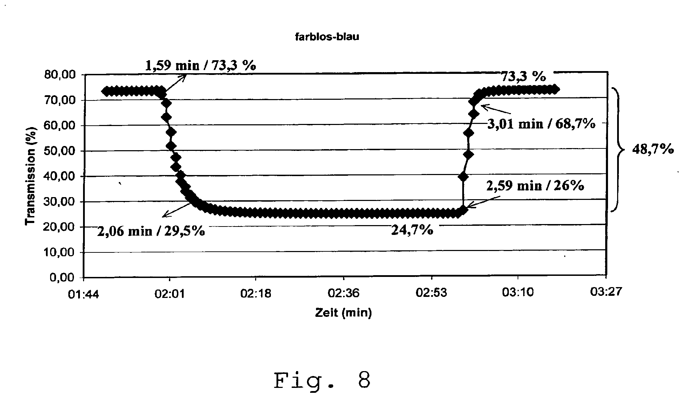

Das Cyclovoltagramm einer reversiblen elektrochemischen Oxidation des EC-Polymers in Kombination mit Polymerelektrolyt (PVDF-HFP, LiTf₂N 0,1 mol/l in EMITf₂N), demonstriert in einem EC-Modul, hergestellt nach Beispiel 1 zeigt Fig. 4 (Messgerät: Solartron 1285, 15 mV/S). Die UV-VIS Transmissionsspektren des gleichen EC-Moduls im farblosen Zustand und bei Anlegen einer Spannung von +0,4 V (orange) und von +0,9 V (blau) sind in Fig. 5 dargestellt (Messgerät: Unicam UV 300, gemessen gegen Luft). Chronoamperometrische Messungen für die Schaltungen zwischen den Potentialen -1,0 V und +0,4 V (farblos-orange) und -1,0 V und +0,9 V (farblos-blau) zeigen Fig. 6 und Fig. 7. Hier werden sehr kleine Stromdichten von 0,2-0,6 mA/cm² direkt nach einem Potentialwechsel beobachtet. Die Schaltzeiten sind aus zeitabhängigen elektrooptischen Messungen des EC-Moduls, hergestellt nach Beispiel 1, für Schaltungen farblos/blau (λ = 750 nm) gewonnen (siehe Fig. 8). In Tab. 1 sind die elektrochromen Charakteristiken der Module nach Beispiel 1 für Orange- und Blaufärbung zusammengefasst.
Der optische Kontrast ist als Transmissionsdifferenz zwischen zwei (Farb)zuständen bei einer bestimmten Wellenlänge definiert. In unserem Fall ist das die Transmissionsdifferenz zwischen dem transparenten Ausgangszustand und den Orange-oder Blauzuständen. Die Transmission des EC-Moduls wurde mit UV-Vis Spektrometer Unicam UV 300 gegen Luft (Referenz) bei Raumtemperatur gemessen. Die Transmission ist als Verhältnis der Intensität des durch das elektrochrome Modul transmittierten Lichtstrahls zur Intensität des einfallenden Lichtstrahls in Prozent definiert.

**Tab.1. Elektrochrome Eigenschaften des Moduls, hergestellt nach Beispiel 1.**

| Charakteristik | orange (λ=480 nm) | blau (λ=750 nm) |
|---|---|---|
| elektrochromer Kontrast, Δ%T | 29 % | 54 % |
| optische Dichte OD = log (T_{Bleaching}/T _{Colouring}) | 0,274 | 0,61 |
| Ladungsdichte, Q, (C/cm²) | 2,9 E-4 | 2,1 E-3 |
| elektrochromer Wirkungsgrad (cm²/C), η = log OD/Q | 945 | 290 (280*, 300**) |

| | | |
|---|---|---|
| * - nach 4200 farblos/blau Schaltungen ** - nach 10000 farblos/blau Schaltungen | | |

## Patentansprüche

1. Elektrochromes Modul (10, 20) umfassend ein erstes Substrat (1), ein zweites Substrat (4), wobei das erste und/oder das zweite Substrat (1, 4) elektrisch leitfähig ist oder mit einer ersten elektrisch leitfähigen Beschichtung (2), respektive mit einer zweiten elektrisch leitfähigen Beschichtung (5) ausgerüstet ist, eine auf dem Substrat (1) oder der ersten leitfähigen Beschichtung (2) angeordnete Beschichtung (3) aus einem elektrochromen Polymer, eine auf dem Substrat (4) oder der zweiten leitfähigen Beschichtung (5) angeordnete Ionenspeicherschicht (6) und einen elektrisch in Reihenschaltung zwischen der elektrochromen Beschichtung (3) und der Ionenspeicherschicht (6) angeordneten Elektrolyten (7), wobei **dadurch gekennzeichnet, dass** das die Ionenspeicherschicht (6) zu mehr als 50 Gew.-% aus einem Material gewählt aus der Gruppe umfassend Wolframoxid, Nickeloxid, Ceroxid, Titanoxid, Molybdänoxid, Vanadiumoxid (WO₃, NiO, CeO₂, TiO₂, MoO₃, V₂O₅) oder Mischungen hiervon besteht elektrochrome Polymer (3) ein im wesentlichen lineares Kondensationspolymer aus einem Tetraarylbenzidin und einem aromatischen oder heteroaromatischen Diol ist, das spannungsgesteuert reversibel zwischen mehr als zwei Redoxstufen geschaltet werden kann, wobei das Kondensationspolymer in einer Redoxstufe farblos und in mindestens zwei Redoxstufen farbig ist, und dass der Elektrolyt (7) ein polymerer Gel-Elektrolyt ist.

2. Elektrochromes Modul (10, 20) nach Anspruch 1 **dadurch gekennzeichnet, dass** das elektrochrome Polymer (3) ein im wesentlichen lineares Kondensationspolymer aus einem substituierten Tetraphenylbenzidin und einem (Hetero)arylen-bis-phenylmethanol der allgemeinen Strukturformel (I), (II), (III) oder (IV) ist, 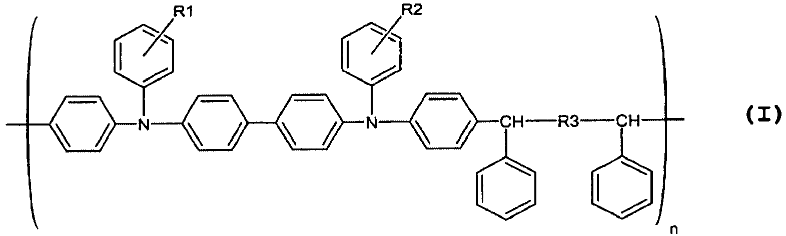 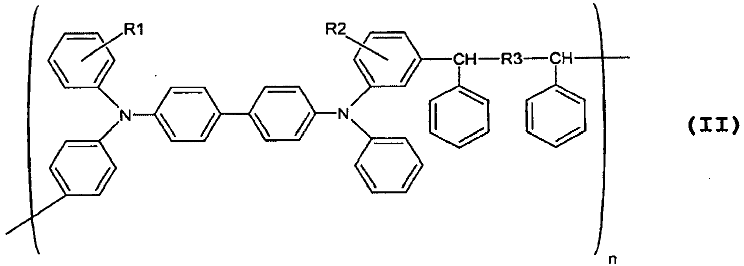 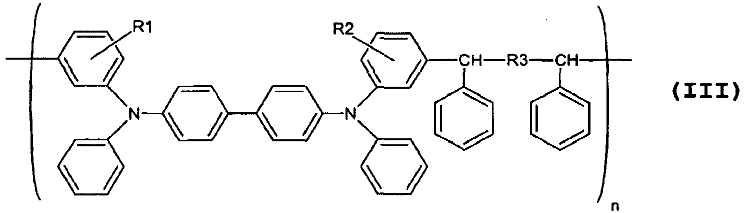 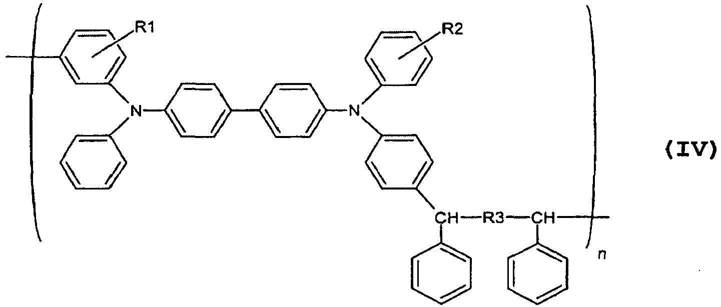 wobei R1 und R2 gleich oder unterschiedlich sind und jeweils eine Alkoxygruppe, ein Halogenatom, eine Cyanogruppe oder einen Kohlenwasserstoffrest mit 1-10 Kohlenstoffatomen, bevorzugt eine Alkylgruppe, eine Allylgruppe oder eine Vinylgruppe, und R3 einen zweiwertigen Rest einer gegebenenfalls substituierten aromatischen oder heteroaromatischen Verbindung, bevorzugt von Benzol, einem Hydrochinondialkylether, Diphenylether, Biphenyl oder Naphthalin, bedeuten.

3. Elektrochromes Modul (10, 20) gemäß Anspruch 1 oder 2, **dadurch gekennzeichnet, dass** das elektrochrome Polymer (3) eine Glastemperatur Tg von mehr als 200 °C aufweist.

4. Elektrochromes Modul (10, 20) nach einem der Ansprüche 1 bis 3, **dadurch gekennzeichnet, dass** der polymere Gel-Elektrolyt (7) mindestens ein vernetztes Polymer wie PVDF-HFP, PAN oder PMMA, mindestens eine ionische Flüssigkeit, wie 1-Ethyl-3-methyl-imidazolium bis(trifluoromethyl)sulfonyl)imid, Propylencarbonat, Mischungen aus Propylencarbonat/ Ethylencarbonat/ Diethylcarbonat und mindestens ein Lithiumsalz wie Lithium-bis(trifluormethansulfonyl)imid (LiTf₂N), Lithiumtrifluormethansulfonat (LiTfO) oder LiClO₄ umfasst.

5. Elektrochromes Modul (10, 20) nach einem der Ansprüche 1 bis 4, **dadurch gekennzeichnet, dass** die Ionenspeicherschicht (6) zu mehr als 80 Gew.-% aus einem Material gewählt aus der Gruppe umfassend Wolframoxid, Nickeloxid, Ceroxid, Titanoxid, Molybdänoxid, Vanadiumoxid (WO₃, NiO, CeO₂, TiO₂, MoO₃, V₂O₅) und Mischungen hiervon, vorzugsweise aus CeO₂-TiO₂-Mischoxid besteht.

6. Elektrochromes Modul (10, 20) nach einem der Ansprüche 1 bis 5, **dadurch gekennzeichnet, dass** dass elektrochrome Polymer (3) spannungsgesteuert zwischen drei Redoxstufen geschaltet werden kann und es dabei bevorzugt, je nach Redoxstufe, die Farbzustände farblos, orange bzw. blau einnimmt.

7. Elektrochromes Modul (10, 20) nach einem der Ansprüche 1 bis 6, **dadurch gekennzeichnet, dass** es bei Anlegen einer Spannung im Bereich von 0,35 bis 0,45 V ein breites Absorptionsband mit einem Absorptionsmaximum im Wellenlängenbereich von 1200 bis 1400 nm aufweist, wobei der elektrochrome Kontrast im Absorptionsmaximum 13 % bis 15 % beträgt.

8. Elektrochromes Modul (10, 20) nach einem der Ansprüche 1 bis 7, **dadurch gekennzeichnet, dass** die Anzahl der Schaltzyklen mit einem elektrochromen Kontrast im Bereich von 90 bis 100 %, bezogen auf den Anfangswert, größer als 20000 ist.

9. Elektrochromes Modul (10, 20) nach einem der Ansprüche 1 bis 8, **dadurch gekennzeichnet, dass** der elektrochrome Wirkungsgrad η = log(optische Dichte/Ladungsdichte Q) größer als 600 cm²/C, bevorzugt größer als 800 cm²/C ist.

10. Elektrochromes Modul (10, 20) nach einem der Ansprüche 1 bis 9, **dadurch gekennzeichnet, dass** es einen elektrochromen Kontrast von größer 40 %, bevorzugt größer 60 % aufweist, bestimmt mit Strahlung einer Wellenlänge von 480 nm oder 750 nm.

11. Elektrochromes Modul (10, 20) nach einem der Ansprüche 1 bis 10, **dadurch gekennzeichnet, dass** die Schaltzeit von blau nach farblos weniger als 2 s und die Schaltzeit von farblos nach blau weniger als 7 s beträgt.

12. Elektrochromes Modul (10, 20) nach einem der Ansprüche 1 bis 11, **dadurch gekennzeichnet, dass** das elektrochrome Polymer (3) eine homogene Schicht mit einer Dicke von 5 bis 500 nm, vorzugsweise 50 bis 500 nm, und insbesondere 200 bis 500 nm bildet.

## Claims

1. Electrochromic module (10, 20) comprising a first substrate (1), a second substrate (4), the first and/or second substrate (1, 4) being electrically conductive or having been provided with, respectively, a first electrically conductive coating (2) or with a second electrically conductive coating (5), a coating (3) of an electrochromic polymer disposed on the substrate (1) or the first conductive coating (2), an ion storage layer (6) disposed on the substrate (4) or the second conductive coating (5) and an electrically series-connected electrolyte (7) disposed between the electrochromic coating (3) and the ion storage layer (6), the ion storage layer (6) consisting to an extent of more than 50 % by weight of a material selected from the group comprising tungsten oxide, nickel oxide, cerium oxide, titanium oxide, molybdenum oxide, vanadium oxide (WO₃, NiO, CeO₂, TiO₂, MoO₃, V₂O₅) and mixtures thereof, **characterized in that** the electrochromic polymer (3) is an essentially linear condensation polymer which has been formed from a tetraarylbenzidine and an aromatic or heteroaromatic diol and can be switched reversibly under voltage control between more than two redox states, the condensation polymer being colorless in one redox state and colored in at least two redox states, and **in that** the electrolyte (7) is a polymeric gel electrolyte.

2. Electrochromic module (10, 20) according to Claim 1, **characterized in that** the electrochromic polymer (3) is an essentially linear condensation polymer formed from a substituted tetraphenylbenzidine and a (hetero)arylenebis-phenylmethanol of the general structural formula (I), (II), (III) or (IV) 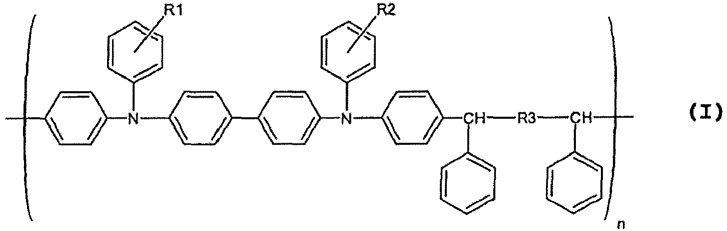 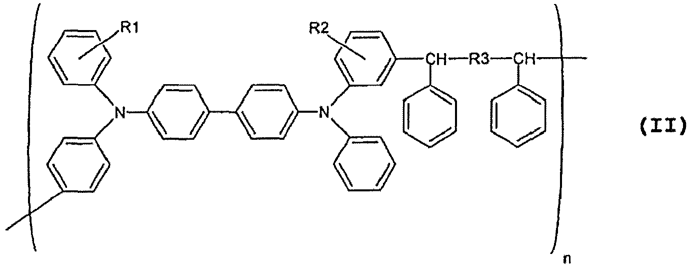 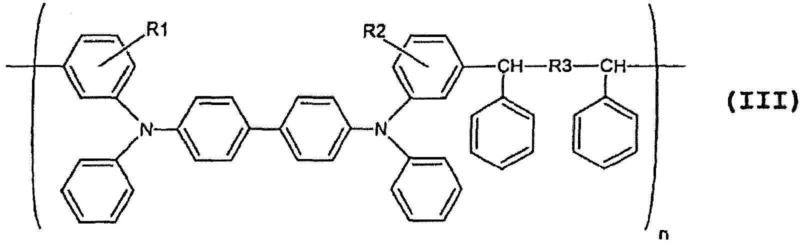 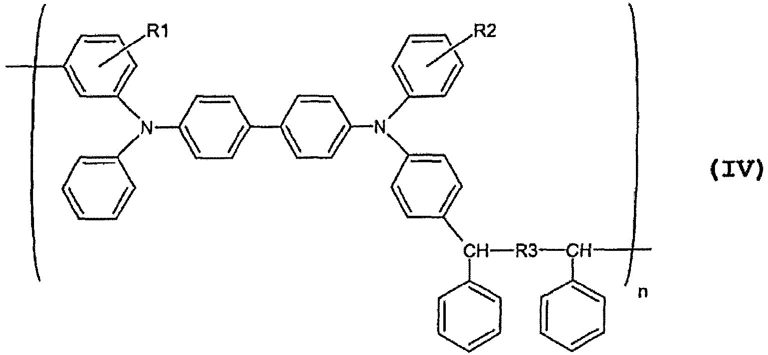 where R1 and R2 are the same or different and are each an alkoxy group, a halogen atom, a cyano group or a hydrocarbyl radical having 1-10 carbon atoms, preferably an alkyl group, an allyl group or a vinyl group, and R3 is a divalent radical of an optionally substituted aromatic or heteroaromatic compound, preferably of benzene, a hydroquinone dialkyl ether, diphenyl ether, biphenyl or naphthalene.

3. Electrochromic module (10, 20) according to Claim 1 or 2, **characterized in that** the electrochromic polymer (3) has a glass transition temperature Tg of more than 200 °C.

4. Electrochromic module (10, 20) according to one of Claims 1 to 3, **characterized in that** the polymeric gel electrolyte (7) comprises at least one crosslinked polymer such as PVDF-HFP, PAN or PMMA, at least one ionic liquid such as 1-ethyl-3-methylimidazolium bis(trifluoromethylsulfonyl)imide, propylene carbonate, mixtures of propylene carbonate/ethylene carbonate/diethyl carbonate and at least one lithium salt such as lithium bis(trifluoromethanesulfonyl)imide (LiTF₂N), lithium trifluoromethanesulfonate (LiTFO) or LiClO₄.

5. Electrochromic module (10, 20) according to one of Claims 1 to 4, **characterized in that** the ion storage layer (6) consists to an extent of more than 80 % by weight, of a material selected from the group comprising tungsten oxide, nickel oxide, cerium oxide, titanium oxide, molybdenum oxide, vanadium oxide (WO₃, NiO, CeO₂, TiO₂, MoO₃, V₂O₅) and mixtures thereof, preferably of CeO₂-TiO₂ mixed oxide.

6. Electrochromic module (10, 20) according to one of Claims 1 to 5, **characterized in that** the electrochromic polymer (3) can be switched under voltage control between three redox states in which it preferably, according to the redox state, assumes the color states of colorless, orange and blue.

7. Electrochromic module (10, 20) according to one of Claims 1 to 6, **characterized in that** on application of a voltage in the range from 0.35 to 0.45 V it has a broad absorption band having an absorption maximum in the wavelength range from 1200 to 1400 nm, the electrochromic contrast in the absorption maximum being 13 % to 15 %.

8. Electrochromic module (10, 20) according to one of Claims 1 to 7, **characterized in that** the number of switching cycles with an electrochromic contrast in the range from 90 to 100 %, based on the starting value, is greater than 20 000.

9. Electrochromic module (10, 20) according to one of Claims 1 to 8, **characterized in that** the electrochromic efficiency n = log(optical density/charge density Q) is greater than 600 cm²/C, preferably greater than 800 cm²/C.

10. Electrochromic module (10, 20) according to one of claims 1 to 9, **characterized in that** it has an electrochromic contrast of greater than 40 %, preferably greater than 60 %, determined with radiation of a wavelength of 480 nm or 750 nm.

11. Electrochromic module (10, 20) according to one of Claims 1 to 10, **characterized in that** the switching time from blue to colorless is less than 2 s and the switching time from colorless to blue less than 7 s.

12. Electrochromic module (10, 20) according to one of Claims 1 to 11, **characterized in that** the electrochromic polymer (3) forms a homogeneous layer having a thickness of 5 to 500 nm, preferably 50 to 500 nm, and especially 200 to 500 nm.

## Revendications

1. Module électrochrome (10, 20) comprenant un premier substrat (1), un deuxième substrat (4), dans lequel le premier et/ou le deuxième substrat (1, 4) est électriquement conducteur ou est doté d'un premier revêtement électriquement conducteur (2), respectivement d'un deuxième revêtement électriquement conducteur (5), un revêtement (3) en polymère électrochrome disposé sur le substrat (1) ou le premier revêtement conducteur (2), une couche accumulatrice d'ions (6) disposée sur le substrat (4) ou le deuxième revêtement conducteur (5) et un électrolyte (7) disposé électriquement en série entre le revêtement électrochrome (3) et la couche accumulatrice d'ions (6), dans lequel la couche accumulatrice d'ions (6) se compose à plus de 50 % en poids d'un matériau choisi dans le groupe comprenant l'oxyde de tungstène, l'oxyde de nickel, l'oxyde de cérium, l'oxyde de titane, l'oxyde de molybdène, l'oxyde de vanadium (WO₃, NiO, CeO₂, TiO₂, MoO₃, V₂O₅) ou leurs mélanges, **caractérisé en ce que** le polymère électrochrome (3) est un polymère de condensation sensiblement linéaire d'un tétraarylbenzidine et un diol aromatique ou hétéroaromatique qui peut être modifié de manière réversible sous l'effet d'une tension entre plus de deux étages redox, dans lequel le polymère de condensation est incolore dans un étage redox et coloré dans au moins deux étages redox, et **en ce que** l'électrolyte (7) est un polymère de gel-électrolyte.

2. Module électrochrome (10, 20) selon la revendication 1, **caractérisé en ce que** le polymère électrochrome (3) est un polymère de condensation sensiblement linéaire d'une tétraphénylbenzidine substituée et un (hétéro)arylène-bis-phénylméthanol de formule structurelle (I), (II), (III) ou (IV), 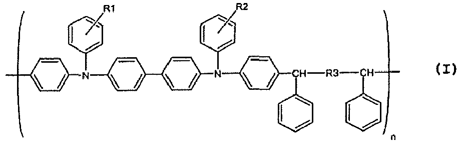 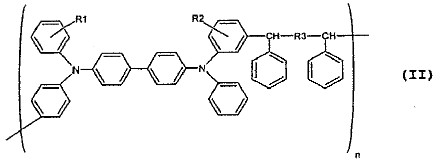 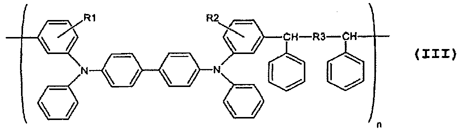 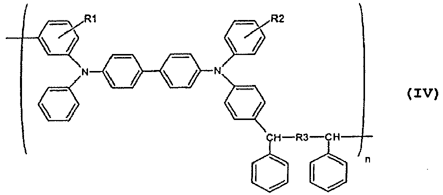 dans lequel R1 et R2 sont identiques ou différents et désignent respectivement un groupe alcoxy, un atome d'halogène, un groupe cyano ou un radical hydrocarboné avec 1-10 atomes de carbone, de préférence un groupe alkyle, un groupe allyle ou un groupe vinyle, et R3 désigne un radical bivalent d'un composé aromatique ou hétéroaromatique éventuellement substitué, de préférence du benzène, un éther dialkylique d'hydroquinone, d'éther diphénylique, de biphényle ou de naphtaline.

3. Module électrochrome (10, 20) selon la revendication 1 ou 2, **caractérisé en ce que** le polymère électrochrome (3) présente une température de transition vitreuse Tg de plus de 200 °C.

4. Module électrochrome (10, 20) selon l'une des revendications 1 à 3, **caractérisé en ce que** le polymère de gel-électrolyte (7) comprend au moins un polymère réticulé comme le PVDF-HFP, le PAN ou le PMMA, au moins un liquide ionique, comme le bis(trifluorométhyl)sulfonyl)imide de 1-éthyl-3-méthyl-imidazolium, le carbonate de propylène, les mélanges de carbonate de propylène/carbonate d'éthylène/carbonate de diéthylène et au moins un sel de lithium tel que le bis(trifluorométhanesulfonyl)imide de lithium (LiTf₂N), le trifluorométhanesulfonate de lithium (LiTfO) ou LiClO₄.

5. Module électrochrome (10, 20) selon l'une des revendications 1 à 4, **caractérisé en ce que** la couche accumulatrice d'ions (6) se compose à plus de 80 % en poids d'un matériau choisi dans le groupe comprenant l'oxyde de tungstène, l'oxyde de nickel, l'oxyde de cérium, l'oxyde de titane, l'oxyde de molybdène, l'oxyde de vanadium (WO₃, NiO, CeO₂, TiO₂, MoO₃, V₂O₅) et leurs mélanges, de préférence l'oxyde mixte de CeO₂-TiO₂.

6. Module électrochrome (10, 20) selon l'une des revendications 1 à 5, **caractérisé en ce que** le polymère électrochrome (3) peut être commuté sous l'effet d'une tension entre trois étages redox et il adopte ainsi de préférence, en fonction de l'étage redox, les états de couleur incolore, orange ou bleu.

7. Module électrochrome (10, 20) selon l'une des revendications 1 à 6, **caractérisé en ce qu'**il présente lors de l'application d'une tension dans la plage de 0,35 à 0,45 V une bande d'absorption large avec un maximum d'absorption dans la plage de longueurs d'onde de 1200 à 1400 nm, dans lequel le contraste électrochrome est 13 % à 15 % au maximum d'absorption.

8. Module électrochrome (10, 20) selon l'une des revendications 1 à 7, **caractérisé en ce que** le nombre des cycles de commutation avec un contraste électrochrome dans la plage de 90 à 100 %, par rapport à la valeur initiale, est supérieur à 20 000.

9. Module électrochrome (10, 20) selon l'une des revendications 1 à 8, **caractérisé en ce que** le rendement électrochrome η = log(densité optique/densité de charge Q) est supérieur à 600 cm²/C, de préférence supérieur à 800 cm²/C.

10. Module électrochrome (10, 20) selon l'une des revendications 1 à 9, **caractérisé en ce qu'**il présente un contraste électrochrome supérieur à 40 %, de préférence supérieur à 60 %, déterminé avec le rayonnement d'une longueur d'ondes de 480 nm ou de 750 nm.

11. Module électrochrome (10, 20) selon l'une des revendications 1 à 10, **caractérisé en ce que** le temps de commutation du bleu à l'incolore est inférieur à 2 s et le temps de commutation de l'incolore au bleu est inférieur à 7 s.

12. Module électrochrome (10, 20) selon l'une des revendications 1 à 11, **caractérisé en ce que** le polymère électrochrome (3) forme une couche homogène avec une épaisseur de 5 à 500 nm, de préférence de 50 à 500 nm, et en particulier de 200 à 500 nm.
